(19) Europäisches Patentamt
European Patent Office
Office européen des brevets

(11) **EP 2 659 602 B1**

(12) **EUROPEAN PATENT SPECIFICATION**

(45) Date of publication and mention
of the grant of the patent:
**25.04.2018 Bulletin 2018/17**

(51) Int Cl.:
*H04B 10/50* *(2013.01)*    *H04B 10/516* *(2013.01)*

(21) Application number: **12703142.5**

(86) International application number:
**PCT/GB2012/050025**

(22) Date of filing: **06.01.2012**

(87) International publication number:
**WO 2012/093267 (12.07.2012 Gazette 2012/28)**

(54) **AN OPTICAL DUOBINARY MODULATED SIGNAL GENERATOR**

OPTISCHER DUOBINÄRER MODULIERTER SIGNALGENERATOR

GÉNÉRATEUR DE SIGNAUX OPTIQUES MODULÉS DUOBINAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2011 GB 201100194**

(43) Date of publication of application:
**06.11.2013 Bulletin 2013/45**

(73) Proprietor: **Huawei Technologies Co., Ltd.
Longgang District
Shenzhen, Guangdong 518129 (CN)**

(72) Inventors:
• **SMITH, David William
Woodbridge
Suffolk IP31 0PG (GB)**

• **HEALEY, Peter
Ipswich
Suffolk IP4 4RQ (GB)**

(74) Representative: **Körber, Martin Hans
Mitscherlich PartmbB
Patent- und Rechtsanwälte
Sonnenstrasse 33
80331 München (DE)**

(56) References cited:
WO-A1-2005/117305    WO-A1-2010/106368
WO-A2-2004/005972    US-B1- 6 388 786

## Description

Field of the Invention

The invention relates to optical fibre telecommunications networks.

Background to the Invention

Duobinary modulation is a well known, correlated signal, three level modulation scheme for transmitting R bit/s using less than R/2 Hz of bandwidth; for example, see A. Lender's paper [Ref. 1], "Correlative digital communication techniques", published in IEEE Trans. Commun., Vol. COM-12, pp. 128-135, 1964. In recent years, it has also been applied to high-speed optical fibre communications systems because of its spectral efficiency and tolerance to propagation dispersion; for example, see, "Duobinary Modulation For optical Systems" on the Inphi Corporation web site published in 2004 [Ref. 2]. In optical systems the three level modulation signal is mapped onto the optical field (E) amplitude: (the three levels are -E, 0, +E).

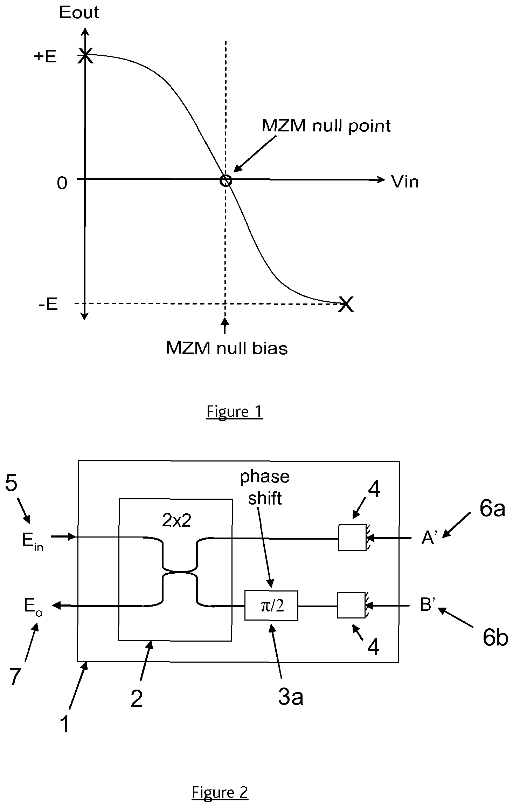

The usual method of generating optical Duobinary modulation is interferometrically based in a Mach-Zehnder Modulator (MZM) employing electro-optic phase modulators. The MZM is biased at its null transmission point (see Fig 1) and driven by a pre-coded and filtered data signal [2]. As the MZM drive signal amplitude passes through the null voltage point the phase on the output optical field changes sign (ie, its phase changes by +/- 180 degrees (or +/- $\pi$ radians)). The amplitude of the optical field is sinusoidally related to the magnitude of the drive voltage above (or below) the null voltage, and reaches its maximum value at the so-called V$\pi$ points (marked with an X in Figure 1). At the null point the output field amplitude is zero.

The MZM comprises optical phase adjusters and electro-optic phase modulators. These are driven by a combination of electrical signals. The resultant modulator is large (several cm long), often requiring special travelling-wave electrode structures, and is not well suited to optical integration in a photonic integrated circuit (PIC).

US 6 388 786 B1 discloses a method for generating a duobinary signal which has the step of: modulating individually an intensity and a phase of a carrier wave. Also disclosed is a duobinary-manner optical transmitter which has: a laser device which outputs signal light; an optical intensity modulator which intensity-modulates the signal light according to a first data signal generated by dividing a data signal into two signals; a precoder which inputs a second data signal generated by dividing the data signal into two signals; and an optical phase modulator which phase-modulates the intensity-modulated signal light according to a signal which is obtained delaying 0.5 bit an output signal of the precoder.

WO 2010/106368 A1 discloses a method for generating an optical single sideband signal comprising the steps of splitting an optical field into two parts and introducing a relative phase delay of +/- $\pi$ /4 radians in each direction of transmission to one of the parts, intensity reflection-modulating each part with electrical signals having a relative phase delay of +/- $\pi$ /2 radians and then recombining the reflection-modulated signals.

References:

1] A. Lender, "Correlative digital communication techniques", IEEE Trans. Commun., Vol. COM-12, pp. 128-135, 1964.

2] H. Shankar, "Duobinary Modulation For optical Systems", White Paper, Inphi 15 Corporation, (2004). http://www.inphi.com/products/whitepapers/DuobinaryModulationForOpticalSystems. pdf

3] Reflective EAM. Manufactured by CIP Technologies. Phoenix House, B55, Adastral Park, Martlesham Heath, Ipswich, Suffolk, UK. IP5 3RE. http://www.ciphotonics.com/products/eam/

4] Monolithic SOA-REAM Manufactured by CIP Technologies. Phoenix House, B55, Adastral Park, Martlesham Heath, Ipswich, Suffolk, UK. IP5 3RE. http://www.ciphotonics.com/products/soa-eam/

5] Standard EAM. Manufactured by CIP Technologies. Phoenix House, B55, Adastral Park, Martlesham Heath, Ipswich, Suffolk, UK. IP5 3RE. http://www.ciphotonics.com/products/eam/

Summary of the Invention

In a first independent aspect, the invention provides an apparatus for generating an optical duobinary modulated signal comprising:

- a splitter for splitting an optical field into a first part and a second part;
- means for inducing a phase delay in the transmission of said first part relative said second part; and
- a modulator for intensity modulating said first part and said second part, which in use, provides an optical phase shift between said first part and said second part; and
- wherein said phase delay means is adjustable to provide a phase delay of +n/2 radians or -$\pi$/2 radians in each direction of the transmission of said first part to said first part.

The advantage of this configuration is that it provides a more compact architecture based on optical intensity modulators (typically 100um long) in the arms of a Michelson interferometer-like arrangement. However, it is stressed, that whilst the architecture may look like a Michelson Interferometer, the operation of this duobinary modulator need not be based on interferometric operation. The intensity modulators could be based on reflection-mode electro-absorption modulators (REAMs,) or REAMs integrated with semiconductor optical amplifiers SOA-REAMs, placed at the ends of each arm and driven by suitably encoded and shaped electrical modulating signals. The relative optical path length of the two arms is adjustable so that the correct optical phase relationship between the modulated optical carriers can be obtained. This Michelson-like architecture is inherently more compact than the MZM and is ideally suited to REAM technology. The small size, wide bandwidth, and low operating voltage of REAMs is also a major advantage for producing array devices suitable for photonic integrated circuits (PICs).

Preferably, the apparatus further comprises a duobinary signal driving means for driving said intensity modulating means with a duobinary encoded signal. This provides a duobinary signal generator for driving the optical intensity modulators of the apparatus.

Preferably, the apparatus further comprises a means of combining said modulated first part and said modulated second part to form a duobinary modulated signal. This combines the modulated first and second parts of the resulting optical field which is indicative of a duobinary encoded signal.

Preferably, said intensity modulating means is a reflection electro-absorption modulator means. This type of reflection mode optical intensity modulator provides the advantage of being very compact (typically 100$\mu$m long) compared to optical phase modulators (1 cm long), whilst having a wide bandwidth (over 20 Ghz) without having to resort to travelling wave electrode structures, and only requiring a low drive voltage.

Preferably, said reflection electro-absorption modulator further comprises a semiconductor optical amplifier. This configuration provides a semiconductor optical amplifier which is polarisation independent from the reflection electro-absorption modulator.

Preferably, said intensity modulation means is an intensity transmission modulating means.

Preferably, said intensity transmission modulating means is a transmission-mode electroabsorption modulator means.

In a second broad independent aspect, the invention provides a method of generating an optical duobinary modulated signal, comprising the steps of:

- splitting an optical field into a first part and a second part;

- inducing a phase delay in said first part relative to said second part; and

- intensity modulating said first part and said second part, which in use, provides an optical phase shift between said first part and said second part; and

- wherein the step of inducing a phase delay in said first part relative to said second part further comprises: introducing a relative phase delay of +/- n/2 radians in each direction of transmission to one of the first part and the second part.

Preferably, said method further comprises the step of driving said intensity modulation of said first part and said second part with a duobinary coded signal.

Preferably, said method further comprises the step of combining said modulated first part and said modulated second part to form a duobinary modulated signal.

Preferably, said step of intensity modulating said first part and said second part, which in use, provides an optical phase shift between said first part and said second part further comprises the steps of: intensity reflection-modulating each part with electrical signals having pre-coded and duobinary encoded modulating signals, and then recombining the reflection-modulated signals.

Preferably, said steps of intensity reflection-modulating each part with electrical signals having pre-coded and duobinary encoded modulating signals, and then recombining the reflection-modulated signals are performed with reflection electro-absorption modulators (REAMs) or REAMs hybrid integrated with semiconductor optical amplifiers SOA-REAMs.

Brief Description of the Drawings

Fig 1 shows the typical biasing arrangement for a Mach Zehnder duobinary modulator.

Fig 2 shows a schematic drawing of a Michelson-like duobinary modulator employing reflection-mode optical intensity modulators.

Fig 3 shows a schematic diagram of a combined differential pre-coder / duobinary encoder for driving an optical duobinary modulator employing intensity modulators.

Fig 4 shows a synchronous version of the combined pre-coder / buobinary encoder shown in Fig 3.

Fig 5 shows a Mach Zehnder-like version of a duobinary modulator employing transmission-mode optical intensity modulators.

Fig 6 shows an example data modulation table for an optical duobinary modulator employing intensity modulators.

Detailed Description of an Embodiment

Figure 2 illustrates a first embodiment of the optical duobinary modulator 1 employing reflection-mode optical intensity modulators 4. The reflection-mode intensity modulators 4 can be based on reflective electro-absorption-modulators (REAMs) [An example of this technology is the Reflective EAM. Manufactured by CIP Technologies. Phoenix House, B55, Adastral Park, Martlesham Heath, Ipswich, Suffolk, UK. IP5 3RE. [Ref. 3]]. The reflection-mode intensity modulators can also be based on REAMs monolithically integrated with semiconductor optical amplifiers SOA-REAMs [An example of this technology is the Monolithic SOA-REAM also Manufactured by CIP Technologies. Phoenix House, B55, Adastral Park, Martlesham Heath, Ipswich, Suffolk, UK. IP5 3RE. [Ref. 4]]. The SOA-REAM has the advantage of reduced optical insertion loss or even gain.

A continuous wave optical field $E_{in}$ 5 is applied to the input arm of an optical coupler 2 that has a nominal power splitting / combining ratio of 50% (3dB). The input light is split into two equal parts by the coupler 2 and guided to the reflective intensity modulators 4. One of the parts is subjected to an optical phase shift 3a of $\pi/2$ radians on its journey towards the intensity modulator 4 and a further $\pi/2$ phase shift on its return. The net result is a relative optical phase difference of $\pi$ radians between the reflected signals on the two arms. Message bearing electrical drive signals A' 6a and B' 6b are applied (along with any dc bias voltages) to the reflective intensity modulators 4. Ignoring any additional optical losses or gains as these simply scale the output amplitude, the resulting optical field $E_o$ 7 on the output of the coupler 2, is then given by the following equation:

$$E_o = 0.5.(0.5)^{0.5}.E_{in}.\{[1 + m.A']^{0.5} - [1 + m.B']^{0.5}\} \qquad (1)$$

where, m is the intensity modulator modulation index (m <= 1), and A' and B' are the intensity modulator bias offset drive signals: A' = (2.A - 1); B' = (2.B - 1). (Data signals A and B are described later.) The bias offset is to ensure that the modulator switches between its fully on and off states when the modulation index, m, is at its maximum value of unity. (In practical modulators, the modulation index may not be as high as unity. The net insertion loss, or gain, may also be greater or less than indicted by equation 1.) The square root terms are due to the intensity modulation process. (An ideal 2x2 coupler scatter matrix was used in deriving equation 1. [A description of the scatter matrix is given by Agrawal; "Applications of Nonlinear Fiber Optics". Academic Press 2001]).

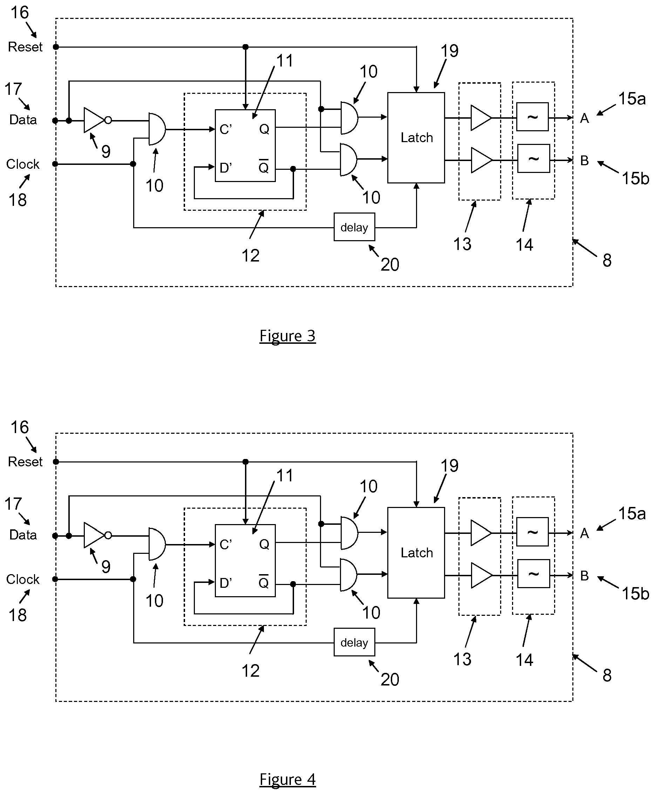

For ideal, infinite bandwidth, optical intensity modulators, m = 1and A' and B' take on binary values -1 or +1. The duobinary encoding scheme shown in Fig 3 ensures that A' and B' cannot be a +1 at the same time, although they can both be -1 at the same time. In this ideal modulator case, equation (1) simplifies to:

$$E_o = 0.5.E_{in} \quad\quad \text{if } A' = +1, \text{ (or equivalently, } A = 1)$$

(2)

$$E_o = -0.5.E_{in} \quad\quad \text{if } B' = +1, \text{ (or equivalently, } B = 1)$$

$$E_o = 0 \quad\quad\quad \text{otherwise.}$$

The modulation drive scheme described above does not need to rely on interferometric effects in the Michelson in order to generate the '0' light state. This is because both intensity modulators can be turned off in order to achieve this. (Duobinary MZM modulators described in the prior art employing optical phase modulators cannot do this so they have to rely on interferometric effects to achieve the zero light level.) However, a duobinary modulation scheme employing intensity modulators can also employ interferomeric effects in order to generate (or enhance) the zero light state simply by driving both intensity modulators at the same level (for example both on at say 50% transmission). Indeed, any residual light passing through the intensity modulators in their nominally off state will interfere interformetrically and may improve the effective extinction ratio on the output port. If the intensity modulators are driven in such a way so as to deliberately exploit interferometric effects then the same drive scheme as used in MZMs may also be used.

Due to the symmetry of the arrangement shown in Fig 2, it is possible to swap the input 5 and output 7 ports over without affecting the operation of the duobinary modulator 1. Due to imperfections in the balance of the optical splitting/combining ratios of coupler 2 and differences in the optical path loss (or gain) in the arms connecting the reflection modulators 4 it may be necessary to adjust the electrical drive signal parameters, such as dc bias and modulating signal amplitude, in order to optimise the modulation performance. The phase shift element 3a may be implemented as a variable phase adjuster (for example, based on a waveguide heater), as this offers a fine adjustment on setting the phase difference between the two arms.

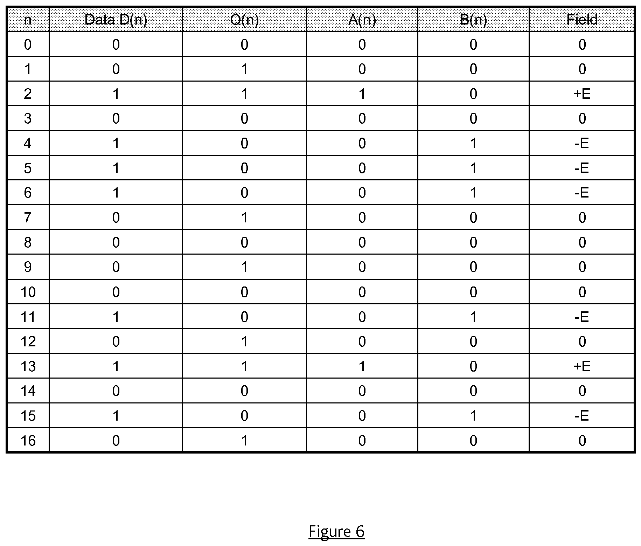

Figure 3 shows a schematic diagram of a combined differential pre-coder / duobinary encoder 8 for generating the optical intensity modulator based duobinary modulator drive signals. The reset port 16 is used to initialise the divide by two counter 12 at the start of data transmission so that its flip-flop Q output 11 is set to logic 0. Digital data, D, is then applied to port 17 and its associated clock signal is applied to port 18. The data is inverted by NOT gate 9 and combined with the clock at AND gate 10. The output of the AND gate 10 is then used to clock the divide by two counter 12. The Q output of the divide by two counter at each clock instant (n) takes the following form: Q(n) = EXOR[Q(n-1), NOT[D(n)]]; where, EXOR[a,b] means take the Exclusive OR of the two operands a, b. The two outputs from the divide by two counter 12, namely Q and its logical inverted version NOT[Q] form the pre-coder signals that are fed are to the duobinary encoder section comprising AND gates 10 and subsequent drivers 13 and filters 14. The pre-coder signals Q(n) and NOT[Q(n)] are logically AND'ed with the Data D(n) to create the intensity modulator drive signals A(n) and B(n) respectively. Fig 6 shows an example data modulation table for the following 16-bit data sequence 0101110000101010. It has been assumed that a reset occurred in time slot n = 0. The column labelled Field in Fig 6 shows the sign of the modulated optical field (+E or -E) or 0 when there is no field.
The low pass filters 14 are used to limit the transmission bandwidth required. Typically, these filters have a 3dB bandwidth in the range R/4 to R/2, where R is the data transmission rate in bits per second. It is common practice in duobinary systems to employ 5th order Bessel filters for this purpose. An added advantage of this filtering is that the intensity modulator bandwidth can also be R/2 or less.

Figure 4 shows a modification to the duobinary modulator 8 that ensures that the drive signals A 15a and B 15b change synchronously with the data clock. A latch gate 19 has been added between the AND gate 10 outputs and the buffer amplifier 13 inputs. The latch gate is clocked by a delayed 12 version of the clock signal in order to ensure that the data at its input ports is stable before it is loaded and passed to the output. The latch is also reset before the start of transmission by a signal on the reset port 16.

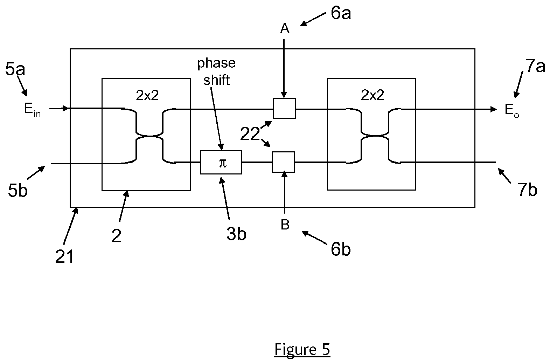

Figure 5 shows a Mach-Zehender-like version of a duobinary modulator 21 employing transmission-mode optical intensity modulators 22. In this version, the optical phase delay element 3b is arranged to give a differential phase shift of $\pi$ radians between the two arms. The optical output signal can be taken from either output port 7a or 7b (or both) and the input signal can be applied to either input port 5a or 5b (or both if different optical wavelengths are used). Again, due to the symmetry of the arrangement, it is possible to swap input and output ports over without affecting the operation of the duobinary modulator. Indeed, it is possible to use this arrangement in both directions simultaneously. In this embodiment, the intensity modulators 22 could be based on standard transmission-mode electro-absorption modulators (EAMs) or EAMs integrated with SOAs [Ref. 5].

The advantages of the proposed optical intensity modulation method of duobinary modulation are summarised below:

Due to its reduced size, the reflection-mode architecture of the proposed duobinary modulator is better suited to photonic integrated circuit (PIC) implementations using either the hybrid or monolithic approaches to PIC fabrication. A further advantage of the reflective Michelson-like approach is that it puts the electrical connections and optical connections on opposite sides simplifying the package and board assembly.

The modulator section of reflection intensity modulators, such as R-EAMs or SOA-REAMs, are very compact (~100um long) compared to optical phase modulators (~1cm long), have a wide-bandwidth (over 20 GHz) without having to resort to travelling wave electrode structures, and only require low drive voltages.

It has been shown that electro-absorption modulators and semiconductor optical amplifiers can be made polarisation independent, whereas most electro-optic phase modulators used in prior art Mach-Zehnder Modulators have a polarisation dependency which is difficult to get round. Polarisation Independence allows the reflective modulator to be separate from the laser source without the need for polarisation maintaining waveguides. The technical effect of the duobinary modulated signal generator is to provide a means of reducing its size, through the use of reflection-mode architecture, which enables its implementation in photonic integrated circuits.

The objective technical problem of the duobinary modulated signal generator can therefore be defined as how to reduce the size of the generator so that it can be incorporated into devices suitable for photonic integrated circuits.

A further second technical effect of the Michelson-like configuration of the duobinary modulated signal generator is to provide a means of placing the electrical connections and optical connections on opposite sides of the device to simplify the package and board assembly.

## Claims

1. An optical duobinary modulated signal generator (1) comprising:

   - a splitter (2) for splitting an optical field into a first part and a second part;
   - means for inducing a phase delay (3a) in the transmission of said first part relative said second part; and
   - a modulator (4) for intensity modulating said first part and said second part, which in use, provides an optical phase shift between said first part and said second part;
   - **characterized in that** said phase delay means is adjustable to provide a phase delay of $+\pi/2$ radians or $-\pi/2$ radians in each direction of the transmission of said first part to said second part.

2. An apparatus according to claim 1, further comprising a duobinary signal driving means for driving said intensity modulating means with a duobinary encoded signal.

3. An apparatus according to either of the preceding claims, further comprising a means (2) of combining said modulated first part and said modulated second part to form a duobinary modulated signal.

4. An apparatus according to any of the preceding claims, wherein said intensity modulating means is a reflection electro-absorption modulator means.

5. An apparatus according to claim 4, wherein said reflection electro-absorption modulator further comprises a semiconductor optical amplifier.

6. An apparatus according to any of the claims 1 to 3, wherein said intensity modulation means is an intensity transmission modulating means.

7. An apparatus according to claim 6, wherein said intensity transmission modulating means is a transmission-mode electro-absorption modulator means.

8. A method of generating an optical duobinary modulated signal, comprising the steps of:

   - splitting (2) an optical field into a first part and a second part;
   - inducing a phase delay (3a) in said first part relative to said second part; and
   - intensity modulating (4) said first part and said second part, which in use, provides an optical phase shift between said first part and said second part;

and
- **characterized in that** the step of inducing a phase delay in said first part relative to said second part further comprises:
- introducing a relative phase delay of +/- $\pi/2$ radians (3a) in each direction of transmission to one of the first part and the second part.

9. A method according to claim 8, further comprising the step of driving said intensity modulation of said first part and said second part with a duobinary coded signal.

10. A method according to either of claims 8 or 9, further comprising the step of combining said modulated first part and said modulated second part to form a duobinary modulated signal.

11. A method according to any of claims 8-9, wherein the step of intensity modulating said first part and said second part, which in use, provides an optical phase shift between said first part and said second part further comprises:

- intensity reflection-modulating (4) each part with electrical signals having pre-coded and duobinary encoded modulating signals, and then recombining the reflection-modulated signals.

12. A method of generating an optical duobinary modulated signal as described in claim 11 where the reflection-modulators are reflection electro-absorption modulators (REAMs) or REAMs hybrid integrated with semiconductor optical amplifiers SOA-REAMs.

**Patentansprüche**

1. Optischer duobinärer modulierter Signalgenerator (1), umfassend:

- einen Teiler (2) zum Teilen eines optischen Feldes in einen ersten Teil und einen zweiten Teil,
- ein Element zum Induzieren einer Phasenverzögerung (3a) bei der Übertragung des ersten Teils relativ zu dem zweiten Teil; und
- eine Modulationseinheit (4) zum Modulieren einer Intensität des ersten Teils und des zweiten Teils, die im Betrieb eine optische Phasenverschiebung zwischen dem ersten Teil und dem zweiten Teil bereitstellt;
- **dadurch gekennzeichnet, dass** das Phasenverzögerungselement einstellbar ist, um eine Phasenverzögerung von $+\pi/2$ Radianten oder $-\pi/2$ Radianten in jeder Richtung der Übertragung des ersten Teils zu dem zweiten Teil bereitzustellen.

2. Vorrichtung nach Anspruch 1, die außerdem ein Element zum Treiben eines duobinären Signals umfasst, um das Intensitätsmodulationselement mithilfe eines duobinären codierten Signals zu treiben.

3. Vorrichtung nach einem der vorhergehenden Ansprüche, die außerdem ein Element (2) zum Kombinieren des modulierten ersten Teils und des modulierten zweiten Teils umfasst, um ein duobinäres moduliertes Signal zu bilden.

4. Vorrichtung nach einem der vorhergehenden Ansprüche, wobei das Intensitätsmodulationselement ein Element einer Reflexionsmodulationseinheit mit Elektroabsorption ist.

5. Vorrichtung nach Anspruch 4, wobei die Reflexionsmodulationseinheit mit Elektroabsorption einen optischen Halbleiterverstärker umfasst.

6. Vorrichtung nach einem der Ansprüche 1 bis 3, wobei das Intensitätsmodulationselement ein Modulationselement für eine Intensitätsübertragung ist.

7. Vorrichtung nach Anspruch 6, wobei das Modulationselement für eine Intensitätsübertragung ein Element einer Übertragungsmodusmodulationseinheit mit Elektroabsorption ist.

8. Verfahren zum Erzeugen eines optischen duobinären modulierten Signals, das die folgenden Schritte umfasst:

- Teilen (2) eines optischen Feldes in einen ersten Teil und einen zweiten Teil,
- Induzieren einer Phasenverzögerung (3a) in dem ersten Teil relativ zu dem zweiten Teil; und

- Modulieren (4) einer Intensität des ersten Teils und des zweiten Teils, die im Betrieb eine optische Phasenverschiebung zwischen dem ersten Teil und dem zweiten Teil bereitstellt; und
- **dadurch gekennzeichnet, dass** der Schritt des Induzierens einer Phasenverzögerung in dem ersten Teil relativ zu dem zweiten Teil außerdem umfasst:
- Einfügen einer relativen Phasenverzögerung von +/- $\pi/2$ Radianten (3a) in jeder Übertragungsrichtung zu dem ersten Teil oder dem zweiten Teil.

9. Verfahren nach Anspruch 8, das außerdem den Schritt eines Treibens der Intensitätsmodulation des ersten Teils und des zweiten Teils mit einem duobinären codierten Signal umfasst.

10. Verfahren nach einem der Ansprüche 8 oder 9, das außerdem den Schritt eines Kombinierens des modulierten ersten Teils und des modulierten zweiten Teils umfasst, um ein duobinäres moduliertes Signal zu bilden.

11. Verfahren nach einem der Ansprüche 8 bis 9, wobei der Schritt des Modulierens der Intensität des ersten Teils und des zweiten Teils, die im Betrieb eine optische Phasenverschiebung zwischen dem ersten Teil und dem zweiten Teil bereitstellt, außerdem umfasst:

   - Reflexionsmodulieren (4) der Intensität jedes Teils mit elektrischen Signalen, die vorcodierte und duobinäre codierte Modulationssignale aufweisen, und danach Neukombinieren der reflexionsmodulierten Signale.

12. Verfahren zum Erzeugen eines optischen duobinären modulierten Signals nach Anspruch 11, wobei die Reflexionsmodulationseinheiten Reflexionsmodulationseinheiten mit Elektroabsorption (Reflection Electro-Absorption Modulators, (REAMs) oder REAMs mit hybrid integrierten optischen Halbleiterverstärkern (Semiconductor Optical Amplifiers REAMs, SOA-REAMs) sind.


**Revendications**

1. Générateur de signaux optiques modulés duobinaires (1) comprenant :

   un séparateur (2) pour diviser un champ optique en une première partie et une seconde partie ;
   des moyens pour induire un retard de phase (3a) dans la transmission de ladite première partie par rapport à ladite seconde partie ; et
   un modulateur (4) pour moduler l'intensité de ladite première partie et de ladite seconde partie qui, en utilisation, fournit un déphasage optique entre ladite première partie et ladite seconde partie ;
   **caractérisé en ce que** lesdits moyens de retard de phase sont ajustables pour fournir un retard de phase de $+\pi/2$ radians ou de $-\pi/2$ radians dans chaque direction de la transmission de ladite première partie par rapport à ladite seconde partie.

2. Appareil selon la revendication 1, comprenant en outre des moyens de commande de signal duobinaire pour commander lesdits moyens de modulation d'intensité avec un signal codé duobinaire.

3. Appareil selon l'une des revendications précédentes, comprenant en outre un moyen (2) pour combiner ladite première partie modulée et ladite seconde partie modulée pour former un signal modulé duobinaire.

4. Appareil selon l'une quelconque des revendications précédentes, dans lequel lesdits moyens de modulation d'intensité sont des moyens de modulateur à électro-absorption par réflexion.

5. Appareil selon la revendication 4, dans lequel ledit modulateur à électro-absorption par réflexion comprend en outre un amplificateur optique à semi-conducteur.

6. Appareil selon l'une quelconque des revendications 1 à 3, dans lequel lesdits moyens de modulation d'intensité sont des moyens de modulation de transmission d'intensité.

7. Appareil selon la revendication 6, dans lequel lesdits moyens de modulation de transmission d'intensité sont des moyens de modulateur à électro-absorption en mode transmission.

8. Procédé de génération d'un signal optique modulé duobinaire, comprenant les étapes suivantes :

diviser (2) un champ optique en une première partie et une seconde partie ;

induire un retard de phase (3a) dans ladite première partie par rapport à ladite seconde partie ; et

moduler l'intensité (4) de ladite première partie et de ladite seconde partie, ce qui, en utilisation, fournit un déphasage optique entre ladite première partie et ladite seconde partie ; et

**caractérisé en ce que** l'étape comprenant d'induire un retard de phase dans ladite première partie par rapport à ladite seconde partie comprend en outre l'étape suivante :

> introduire un retard de phase relatif de +/- $\pi$/2 radians (3a) dans chaque direction de transmission au niveau d'une partie parmi la première partie et la seconde partie.

9. Procédé selon la revendication 8, comprenant en outre l'étape comprenant de commander ladite modulation d'intensité de ladite première partie et de ladite seconde partie avec un signal codé duobinaire.

10. Procédé selon l'une ou l'autre des revendications 8 et 9, comprenant en outre l'étape comprenant de combiner ladite première partie modulée et ladite seconde partie modulée pour former un signal modulé duobinaire.

11. Procédé selon l'une quelconque des revendications 8 et 9, dans lequel l'étape de modulation d'intensité de ladite première partie et de ladite seconde partie, qui, en utilisation, fournit un déphasage optique entre ladite première partie et ladite seconde partie, comprend en outre les étapes suivantes :

> moduler (4) par réflexion d'intensité chaque partie avec des signaux électriques ayant des signaux de modulation précodés et codés duobinaires, puis recombiner les signaux modulés par réflexion.

12. Procédé de génération d'un signal optique modulé duobinaire tel que décrit dans la revendication 11, où les modulateurs à réflexion sont des modulateurs à électro-absorption par réflexion (REAM) ou des REAM hybrides intégrés avec des amplificateurs optiques à semi-conducteur, SOA-REAM.

Eout

+E ✕

MZM null point

0 ⊗ → Vin

-E ✕

MZM null bias

Figure 1

phase shift

5

Ein →

2x2

Eo ←

π/2

4

A' 6a

B' 6b

4

7

1

2

3a

Figure 2

Figure 3

Figure 4

Figure 5

| n | Data D(n) | Q(n) | A(n) | B(n) | Field |
|---|-----------|------|------|------|-------|
| 0 | 0 | 0 | 0 | 0 | 0 |
| 1 | 0 | 1 | 0 | 0 | 0 |
| 2 | 1 | 1 | 1 | 0 | +E |
| 3 | 0 | 0 | 0 | 0 | 0 |
| 4 | 1 | 0 | 0 | 1 | -E |
| 5 | 1 | 0 | 0 | 1 | -E |
| 6 | 1 | 0 | 0 | 1 | -E |
| 7 | 0 | 1 | 0 | 0 | 0 |
| 8 | 0 | 0 | 0 | 0 | 0 |
| 9 | 0 | 1 | 0 | 0 | 0 |
| 10 | 0 | 0 | 0 | 0 | 0 |
| 11 | 1 | 0 | 0 | 1 | -E |
| 12 | 0 | 1 | 0 | 0 | 0 |
| 13 | 1 | 1 | 1 | 0 | +E |
| 14 | 0 | 0 | 0 | 0 | 0 |
| 15 | 1 | 0 | 0 | 1 | -E |
| 16 | 0 | 1 | 0 | 0 | 0 |

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6388786 B1
- WO 2010106368 A1

**Non-patent literature cited in the description**

- Correlative digital communication techniques. *IEEE Trans. Commun.,* 1964, vol. COM-12, 128-135
- Duobinary Modulation For optical Systems. Inphi Corporation, 2004
- **A. LENDER.** Correlative digital communication techniques. *IEEE Trans. Commun.,* 1964, vol. COM-12, 128-135
- **H. SHANKAR.** Duobinary Modulation For optical Systems. Inphi 15 Corporation, 2004
- **AGRAWAL.** Applications of Nonlinear Fiber Optics. Academic Press, 2001